# EUROPÄISCHE PATENTSCHRIFT

(11) **EP 2 780 616 B1**
(45) Veröffentlichungstag und Bekanntmachung des Hinweises auf die Patenterteilung: **10.02.2016**
(21) Anmeldenummer: 12766897.8
(22) Anmeldetag: 28.09.2012
(51) Int. Cl.: F16L 3/24, H02G 3/30

(54) **KABEL- ODER LEITUNGSAUFNAHME, PACKMITTELBEHANDLUNGSMASCHINE ODER -ANLAGE SOWIE LEITUNGSTRÄGER FÜR EINE KABEL- ODER LEITUNGSAUFLAGE**
CABLE OR CONDUIT RECEIVING DEVICE, PACKING MEANS HANDLING MACHINE OR SYSTEM, AND CONDUIT CARRIER FOR A CABLE OR CONDUIT SUPPORT
LOGEMENT DE CÂBLES OU DE CONDUCTEURS, MACHINE OU INSTALLATION DE TRAITEMENT D'EMBALLAGES, AINSI QUE PORTE-CONDUCTEURS POUR LA POSE DE CÂBLES OU DE CONDUCTEURS

(30) Priorität: 16.11.2011 DE 102011118621
(43) Veröffentlichungstag der Anmeldung: 24.09.2014
(73) Patentinhaber: KHS GmbH, 44143 Dortmund (DE)
(72) Erfinder: BERGER, Thomas, 61479 Glashütten (DE); SENDOBRY, Eberhard, 64668 Rimbach (DE); DETEMPLE, Thomas, 82152 Planegg (DE)
(86) Internationale Anmeldenummer: PCT/EP2012/004075
(87) Internationale Veröffentlichungsnummer: WO 2013/071995

(56) Entgegenhaltungen:
- EP-A2- 1 808 945
- US-A1- 2010 038 129

## Beschreibung

Die Erfindung bezieht sich auf eine Maschine oder Anlage gemäß Oberbegriff Patentanspruch 1.

Zur Aufnahme von Kabeln oder Leitungen sind Kabelkanäle in unterschiedlichster Form bekannt, die grundsätzlich jeweils aus wenigstens einem einen Innenraum zur Aufnahme der Kabel bildenden und mit einem Deckel verschließbaren Profilkörper bestehen. Bei einem bekannten Kabelkanal (EP 1 808 945 A2), der für eine Befestigung durch Verrasten in einer von Wandabschnitten gebildeten Winkelecke geeignet ist, ist der Profilkörper als Winkelprofil mit zwei Schenkeln ausgebildet, die jeweils an ihrem freien Rand in eine Vielzahl von voneinander beabstandeten und die Verlängerung des betreffenden Schenkels bildende Lamellen übergehen, die als federnde Rasten zum Halten eines den Innenraum des Profils verschließbaren Deckels dienen.

Ein ebenfalls bekannter Kabelkanal (US 2010/038129 A1) besteht aus wenigstens zwei gleichartigen C-Profilen, die durch Verrasten derart aneinander befestigbar sind, dass nach dem Verrasten eines ersten der beiden Profile das zweite Profil an seiner offenen Seite verschlossen ist und dadurch ein Kabel oder Leitungen aufnehmender geschlossener Kanal geschaffen ist. Zum Verschließen der offenen Seite des ersten Profils und zur Ausbildung eines dortigen geschlossenen Kanals ist ein ebenfalls durch Verrasten befestigbares Deckel-Profil vorgesehen.

Bekannt sind u.a. auch als L-Profil ausgebildete Leitungsträger für Installationszwecke, die im Wesentlichen aus zwei rechtwinklig zueinander verlaufenden Schenkeln bzw. aus einem Basisschenkel oder -abschnitt und einem von diesem rechtwinklig wegstehenden Schenkelabschnitt bestehen, der die Auflage für Kabel und/oder Leitungen bildet. Diese bekannten Leitungsträger sind für eine Befestigung an Hutschienen ausgebildet, und zwar derart, dass der Basisschenkel an der jeweiligen, an einem Untergrund, beispielsweise an einer elektrischen Installation befestigten Hutschiene durch Verschrauben montiert wird. Allein schon durch diese Art der Befestigung und die Notwendigkeit der Verwendung einer Hutschiene ist die Montage dieser bekannten Leitungsträger zeit- und kostenaufwendig.

Aufgabe der Erfindung ist es, eine Maschine oder Anlage mit einer Leitungsaufnahme aufzuzeigen, die zur Aufnahme auch einer Vielzahl von Kabeln und Leitungen in vereinfachter Weise realisierbar ist. Zur Lösung dieser Aufgabe ist eine Leitungsaufnahme entsprechend dem Patentanspruch 1 ausgebildet.

"Packmittel" sind im Sinne der Erfindung Verpackungen oder Behältnisse, die im u.a. Lebensmittelbereich und dabei speziell auch im Getränkebereich üblicherweise verwendet werden, und zwar insbesondere Behälter, wie z. B. Flaschen, Dosen, auch Weichverpackungen, beispielsweise solche hergestellt aus Karton und/oder Kunststofffolie und/oder Metallfolie, Transportbehälter, z.B. Flaschenkästen usw.

"Packmittelbehandlungsmaschinen oder -anlagen" sind im Sinne der Erfindung Maschinen oder Anlagen, auch solche aus mehreren Einzelmaschinen oder Aggregaten, die zum Herstellen und/oder Behandeln von Packmitteln, beispielsweise zum Reinigen und/oder Sterilisieren und/oder Füllen und/oder Verschließen und/oder Etikettieren und/oder Bedrucken und/oder Verpacken und/oder Zusammenstellen von Packmitteln dienen, insbesondere Maschinen oder Anlagen der Getränkeindustrie.

"Leitungen" sind im Sinne der Erfindung insbesondere elektrische Leitungen oder Kabel unterschiedlichster Art, u.a. elektrische Versorgungsleitungen, Leitungen zur Übertragung von Daten und/oder Messwerten, Steuerleitungen usw., aber auch Leitungen für flüssige, gas- und/oder dampfförmige Medien.

Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Ein besonderer Vorteil der Erfindung besteht darin, dass die die Kabelauflage bildenden Leitungsträger allein durch Verrasten oder Clipsen an dem wenigstens einen Wandelement der Packmittelbehandlungsmaschine oder - anlage befestigt sind, und zwar vorzugsweise durch unmittelbares Verrasten an dem wenigstens einen Wandelement, d.h. ohne die Verwendung weiterer Bauteile für die Montage oder Befestigung und ohne besondere Montagewerkzeuge. Die Leitungsträger können mit sämtlichen für die Montage oder Befestigung notwendigen Funktionselementen preiswert als Formteile, beispielsweise aus Kunststoff hergestellt werden.

Das Wandelement ist dabei beispielsweise Teil eines Maschinengehäuses oder einer eine Maschine oder die Anlage umgebenden Einhausung oder eines sich entlang einer Anlage erstreckenden Tragsystems.

Weiterbildungen, Vorteile und Anwendungsmöglichkeiten der Erfindung ergeben sich auch aus der nachfolgenden Beschreibung von Ausführungsbeispielen und aus den Figuren. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:

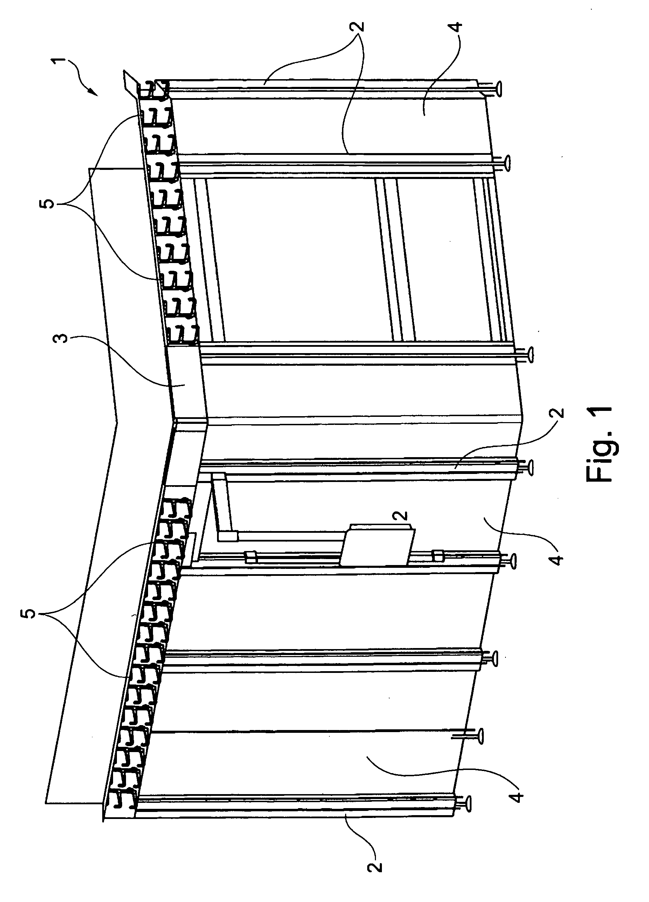

- Fig. 1: in vereinfachter Teildarstellung eine Einhausung einer Maschine, beispielsweise einer Maschine zum Behandeln von Packmitteln in Form von Behältern, zusammen mit einer von einer Vielzahl von Kabel- oder Leitungsträgern gebildeten Leitungsträgeranordnung;
- Fig. 2: in vergrößerter perspektivischer Einzeldarstellung ein Wandelement in Vorderansicht mit mehreren an diesem vorgesehenen Leitungsträgern;
- Fig. 3: in einer perspektivischen Rückansicht das Wandelement der Figur 2 mit den Leitungsträgern;
- Fig. 4: in perspektivischer Einzeldarstellung einen der Kabel- oder Leitungsträger;
- Fig. 5: in einer vergrößerten perspektivischen Teildarstellung den Leitungsträger der Figur 4;
- Fig. 6: in einer Darstellung ähnlich Figur 4 eine weitere Ausführungsform des erfindungsgemäßen Kabel- oder Leitungsträgers.

In den Figuren ist 1 eine Einhausung einer nicht dargestellten Maschine oder Anlage, beispielsweise einer Maschine und Anlage zum Behandeln von Behältern. Die Einhausung 1 besteht bei der dargestellten Ausführungsform aus mehreren vertikalen säulenartigen Streben 2, die mit ihren unteren Ende auf einem Untergrund aufstehen, und aus mehreren, die Streben 2 an ihrer Oberseite miteinander verbindenden Wandelementen 3 sowie aus großformatigen Wandelementen 4, die den Innenraum der Einhausung 1 zusätzlich nach außen hin abschließen.

An der Außenseite der Einhausung 1 ist an den Wandelementen 3 eine Vielzahl von Kabel- oder Leitungsträgern 5 vorgesehen, die in ihrer Gesamtheit eine Leitungsträgeranordnung oder Leitungsaufnahme zur Aufnahme von Kabeln oder Leitungen bilden, die an der Außenseite der Einhausung 1 verlegt sind, und zwar am oberen Bereich.

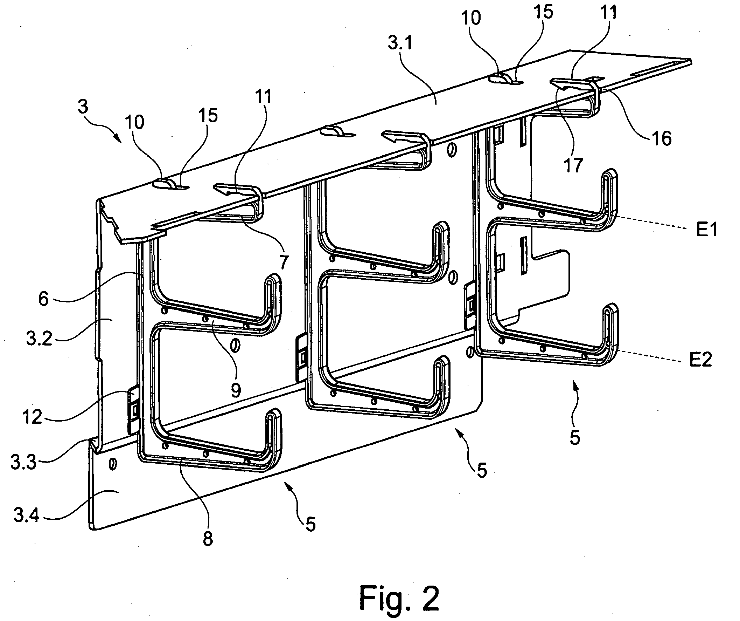

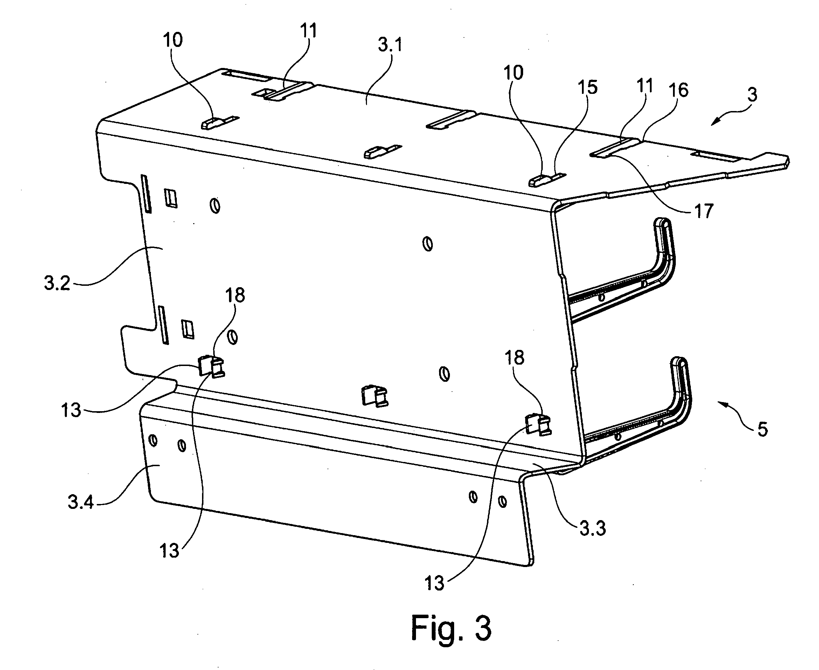

Wie die Figuren 2 und 3 zeigen, sind die Wandelemente 3 als Winkelprofil aus einem metallischen Flachmaterial, vorzugsweise aus einem korrosionsbeständigem Stahlblech durch Schneiden und Biegen hergestellt, und zwar mit einem oberen Profilabschnitt 3.1, der im montierten Zustand mit seinen Oberflächenseiten in horizontalen oder im Wesentlichen horizontalen Ebenen angeordnet ist und über die restliche Außenseite der Einhausung 1 vorsteht, mit einem an dem Profilabschnitt 3.1 rechtwinklig anschließenden Profilabschnitt 3.2, der im montierten Zustand mit seinen Oberflächenseiten in vertikalen oder im Wesentlichen in vertikalen Ebenen angeordnet ist, mit einem Profilabschnitt 3.3, der an Profilabschnitt 3.2 rechtwinklig anschließt und parallel zu dem Profilabschnitt 3.1 orientiert ist, sowie mit dem rechtwinklig an den Profilabschnitt 3.3 anschließenden und parallel zum Profilabschnitt 3.2 orientierten Profilabschnitt 3.4. Der Profilabschnitt 3.3 besitzt eine gegenüber dem Profilabschnitt 3.1 stark reduzierte Breite und steht von dem Profilabschnitt 3.2 über die dem Profilabschnitt 3.1 abgewandte Rückseite des Wandelementes 3 weg. Beispielsweise mit dem Profilabschnitt 3.4 ist das jeweilige Wandelement 3 an der Einhausung 1 bzw. an den vertikalen Elementen 2 befestigt.

Die jeweils einstückig als Formteil aus einem geeigneten Material, z.B. aus einem elastischen und ausreichend belastbaren Material, beispielsweise aus Kunststoff gefertigten Leitungsträger 5 sind in der nachstehend noch näher beschriebenen Weise allein durch Verrasten an dem jeweiligen Wandelement 3 gehalten, und zwar derart, dass sie sich unterhalb des oberen Profilabschnittes 3.1 im Winkelbereich oder im Wesentlichen im Winkelbereich befinden, der zwischen den Profilabschnitten 3.1 und 3.2 an der Vorderseite des Wandelementes 3 gebildet ist, und dort zwei in vertikaler Richtung, d.h. in einer Achsrichtung senkrecht zu den Ebenen des Profilabschnittes 3.1 übereinander liegende Ebenen E1 und E2 zur Aufnahme jeweils mehrerer Kabel oder Leitungen bilden.

Im Detail sind die Leitungsträger 5 so ausgeführt, dass sie jeweils einen rückwärtigen Basisabschnitt 6 und drei über eine gemeinsame Seite des Basisabschnittes 6 weg stehende und bei der dargestellten Ausführungsform parallele oder im Wesentliche parallele Schenkelabschnitte 7 - 9 aufweisen, und zwar den in den Figuren oberen Schenkelabschnitt 7, den in den Figuren unteren Schenkelabschnitt 8 und den in der Mitte oder etwa in der Mitte zwischen den Schenkelabschnitten 7 und 8 vorgesehenen Schenkelabschnitt 9. Die beiden Schenkelabschnitte 8 und 9 sind an ihrem dem Basisabschnitt 6 entfernt liegenden Ende jeweils hakenförmig mit einem oben gerichteten Teilabschnitt 8.1 bzw. 9.1 ausgeführt und bilden mit ihrer dem Schenkelabschnitt 7 zugewandten Oberseite jeweils die Auflage für die in den Figuren nicht dargestellten Leitungen oder Kabel. Die Form der Leitungsträger 5 lässt sich auch dahingehend beschreiben, dass jeder Leitungsträger 5 als C-förmiger Bügel, und zwar bestehend aus dem oberen Schenkelabschnitt 7, dem unteren Schenkelabschnitt 8 und dem Basisabschnitt 6, und mit einem von dem Schenkelabschnitt 9 gebildeten Mittelsteg ausgeführt ist.

Für die Befestigung an dem Wandelement 3 sind an dem oberen Schenkelabschnitt 7 zwei hakenartige Halte- oder Verbindungselemente 10 und 11 angeformt, die jeweils eine zur Rückseite, d.h. zum Basisabschnitt 6 hin offene Hakenöffnung 10.1 bzw. 11.1 aufweisen sowie mit ihren freien Hakenenden 10.2 und 11.2 in Richtung auf den Basisabschnitt 6 orientiert sind und von denen sich das Verbindungselement 10 in der Nähe des Basisabschnittes 6 und das Verbindungselement 11 in der Nähe des freien Endes 7.1 des Schenkelabschnittes 7 befindet bzw. dort in diesen Schenkelabschnitt übergeht. Das Verbindungselement 11 ist an seinem freien Hakenende 11.2 als Rast mit einem entsprechenden Rastzahn ausgeführt.

An seiner den Schenkelabschnitten 7 - 9 abgewandten Rückseite ist der Basisabschnitt 6 im unteren Bereich, d.h. in der Nähe des Übergangs zum Schenkelabschnitt 8 mit einer plattenförmigen Erweiterung 12 ausgebildet, deren Oberflächenseiten in Ebenen senkrecht zur Längserstreckung der Schenkelabschnitte 7 - 9 liegen und die an der dem Basisabschnitt 6 abgewandten Rückseite eine großflächige Anlage mit zwei Rastnasen 13 bildet. Letztere sind in Richtung senkrecht zur Längserstreckung des Basisabschnittes 6 gegeneinander versetzt.

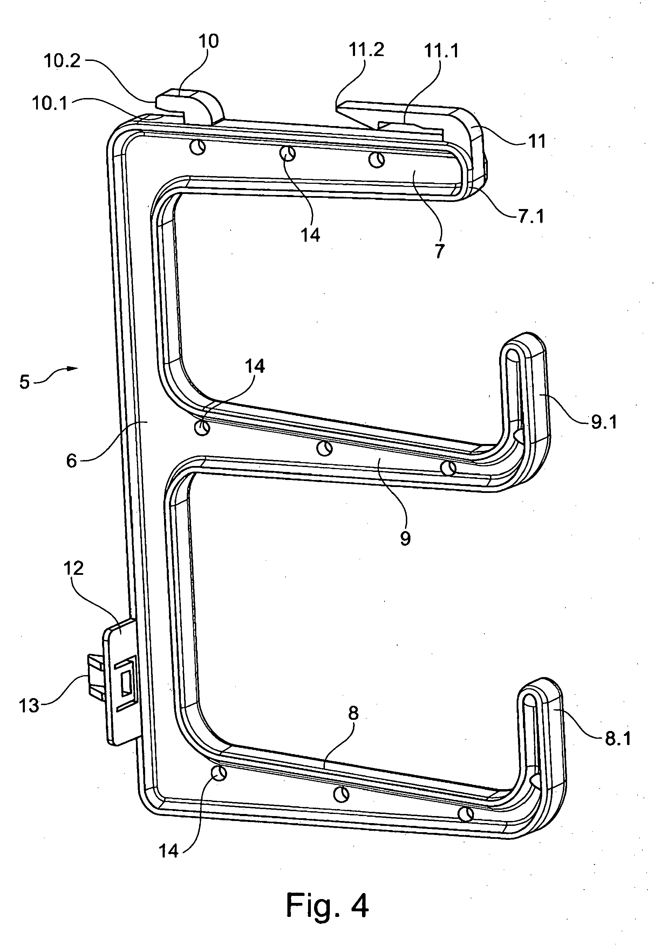

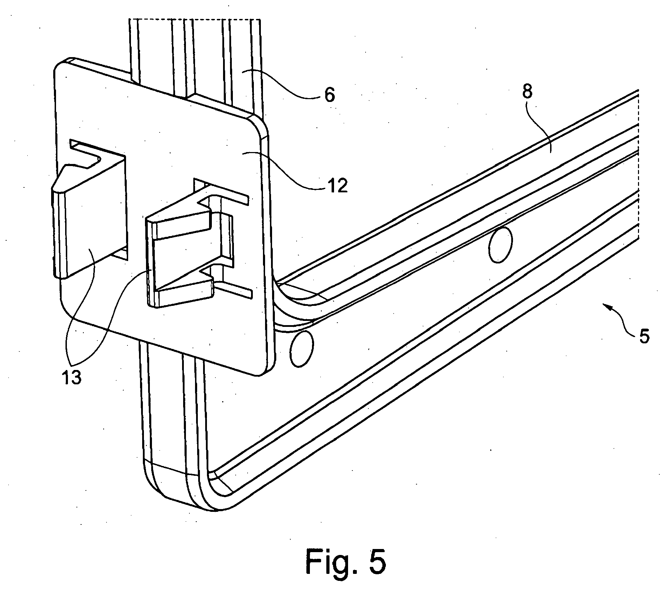

Wie insbesondere den Figuren 4 und 5 auch zu entnehmen ist, ist jeder Leitungsträger 5 weiterhin so geformt, dass er im Bereich des Basisabschnitts 6 und der Schenkelabschnitte 7 - 9 einen I-förmigen oder doppel-T-förmigen Querschnitt aufweist, sodass der Leitungsträger 5 trotz eines reduzierten Materialverbrauchs die erforderliche Festigkeit besitzt. In den Schenkelabschnitten 7 - 9 sind weiterhin durchgehende Öffnungen 14 vorgesehen, die beispielsweise zum Befestigen der Kabel oder Leitungen mit entsprechenden Befestigungselementen, beispielsweise Kabelbindern dienen.

Für die Verbindungselemente 10 und 11 und die Rasten 13 sind in den Wandelementen 3 in einem vorgegebenen Raster Aussparungen oder Öffnungen 15 - 18 vorgesehen, und zwar in dem oberen Profilabschnitt 3.1 die Öffnungen 15 für die Verbindungselemente 10 in der Nähe des Übergangs zum Profilabschnitt 3.2, die randseitig offenen Öffnungen 16 für das Verbindungselement 11 und die Öffnungen 17 für die Rastnasen an dem Hakenende 11.2 und in dem Profilabschnitt 3.2 die Öffnungen 18, die jeweils für die beiden Rastnasen 13 jedes Leitungsträgers 5 gemeinsam vorgesehen ist. Die Öffnungen bilden Öffnungsgruppen, von denen jede jeweils eine Öffnung 15, 16, 17 und 18 aufweist und von denen jede zur Befestigung eines Leitungsträgers 5 dient. Die Öffnungen 15 - 18 jeder Öffnungsgruppe sind in einer gemeinsamen senkrecht zu den Profilabschnitten 3.1 - 3.4 orientierten Ebene angeordnet und in Längsrichtung des Wandelementes 3 in dem vorgegebenen Rastermaß voneinander beabstandet.

Die Befestigung jedes Leitungsträgers am Wandelement 3 bzw. an der betreffenden Öffnungsgruppe erfolgt derart, dass die beiden Verbindungselemente 10 und 11 sowie die Rastnasen 13 in die zugehörigen Öffnungen 15 und 16 bzw. 18 eingeschoben werden, sodass die Verbindungselemente 10 und 11 schließlich den oberen Profilabschnitt 3.1 an dessen Oberseite am Rand der zugehörigen Öffnung 15 bzw. 16 übergreifen, die Rastnase am Hakenende 11.2 von der Oberseite des Profilabschnittes 3.1 her in die Öffnung 17 eingreift und die Rastnasen 13 in der zugehörigen Öffnung 18 verrasten, wobei der Basisabschnitt mit der Erweiterung 12 gegen die Forderseite des Profilabschnitts 3.2 die Öffnung 18 überdeckend anliegt. Im montierten Zustand ist somit der jeweilige Leitungsträger 5 mit seinem oberen Schenkelabschnitt 7 der Unterseite des oberen Profilabschnittes 3.1 unmittelbar benachbart und mit der Längserstreckung des Basisabschnittes 6 vertikal oder im Wesentlichen vertikal bzw. senkrecht zu den Ebenen des oberen Profilabschnittes 3.1 orientiert und der Forderseite bzw. der Außenfläche des Profilabschnittes 3.2 unmittelbar benachbart angeordnet. Weiterhin liegt jeder Leitungsträger 5 mit dem Basisabschnitt 6 sowie mit der dem Basisabschnitt 6 abgewandten Seite der plattenförmigen Erweiterung 12 gegen die Vorderseite des Profilabschnittes 3.2 an und steht mit dem unteren Ende des Basisabschnittes 6 etwas über den Profilabschnitt 3.3 nach unten vor.

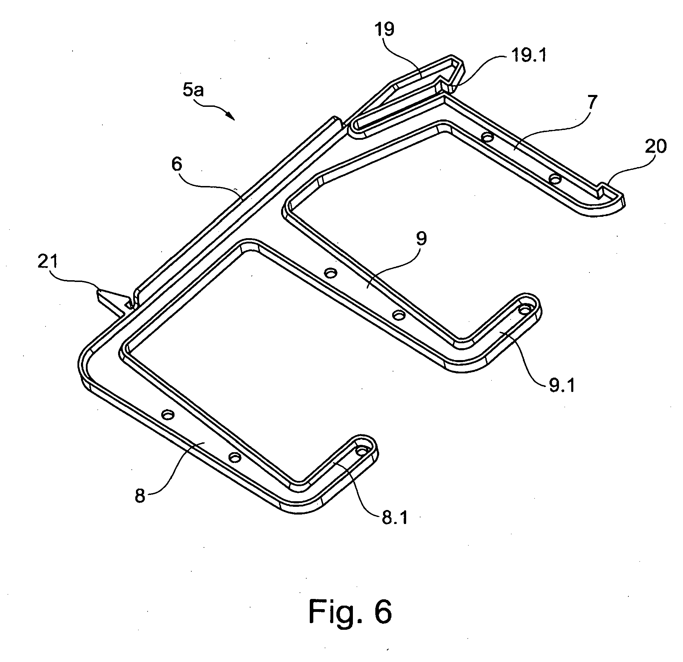

Die Figur 6 zeigt in perspektivischer Einzeldarstellung als weitere Ausführungsform einen Leitungsträger 5a, der wiederum als C-förmiger Bügel mit dem oberen Schenkelabschnitt 7, den unteren Schenkelabschnitt 8 und dem Basisabschnitt 6 sowie mit dem vom Schenkelabschnitt 9 gebildeten Mittelsteg als einstückiges Formteil z.B. aus Kunststoff oder einem anderen geeigneten Material ausgeführt ist. Der Leitungsträger 5a unterscheidet sich von dem Leitungsträger 5 im Wesentlichen durch die Form der Befestigungs- bzw. Verbindungselemente. Anstelle der beiden Verbindungselemente 10 und 11 ist der Basisabschnitt 6 an seinem oberen Ende mit einem eine Rastnase 19.1 bildenden federnden Rast- oder Verbindungselement 19 ausgeführt und der obere Schenkelabschnitt 7 ist an seinem freien Ende 7.1 mit einem Vorsprung 20 ausgebildet, der über die dem Schenkelabschnitt 9 abgewandte Oberseite des Schenkelabschnitts 7 vorsteht. Weiterhin ist im unteren Bereich des Leitungsträgers 5a, d.h. in der Nähe des Übergangs des Basisabschnittes 6 und des Schenkelabschnitts 8 an der den Schenkelabschnitten 7 - 9 abgewandten Rückseite des Basisabschnittes 6 eine eine Rast bildende Haltenase 21 angeformt. Der Leitungsträger 5a kann anstelle des Leitungsträgers 5 ebenfalls an dem jeweiligen Wandelement 3 montiert werden, und zwar in der Weise, dass das Verbindungselement 19 mit seiner Rastnase 19.1 an der Öffnung 15 verrastet, wobei die Rastnase 19.1 dann den dem Profilabschnitt 3.2 abgewandten Rand der Öffnung 15 übergreift, der Vorsprung 20 in der randseitig offenen Öffnung 16 und die Haltenase 21 in der Öffnung 18 aufgenommen sind, und zwar mit ihrer Rastnase den oberen, dem Profilabschnitt 3.1 zugewandten Rand der Öffnung 18 übergreifend.

Die von der Vielzahl der an den Wandelementen 3 befestigten Leitungsträgern 5 und/oder 5a gebildete Leitungs- oder Kabelaufnahme ersetzt die bisher üblichen aufwendigen Kabelkörbe, und zwar unter Beibehaltung der Vorteile einer optimalen Zugänglichkeit der auf den Leitungsträgern 5 bzw. 5a verlegten Kabel oder Leitungen, beispielsweise für Reinigungs- und/oder Reparaturzwecke usw. Da die Leitungsaufnahme seitlich zugänglich ist, besteht weiterhin die Möglichkeit, im Bedarfsfall weitere Kabel oder Leitungen problemlos auf den Leitungsträgern 5 bzw. 5a vorzusehen oder Leitungen von den Leitungsträgern 5 bzw. 5a problemlos zu entfernen. Mit den Leitungsträgern 5 können auch Ecken und/oder Abzweigungen in der jeweiligen Leitungs- oder Kabelaufnahme problemlos realisiert werden.

Ein wesentlicher Vorteil der Leitungsträger 5 bzw. 5a besteht auch darin, dass diese als Formteile preiswert herstellbar sind und eine einfache, insbesondere auch zeitsparende Montage durch Verrasten ermöglichen, zumal die für die Montage der Leitungsträger 5 bzw. 5a notwendigen Öffnungen 15 - 18 beim Herstellen der für die Wandelemente 3 verwendete Blechzuschnitte z.B. durch Laser-Schneiden kostensowie zeitsparend mit erzeugt werden können.

Die Erfindung wurde voranstehend an Ausführungsbeispielen beschrieben. Es versteht sich, dass zahlreiche Änderungen sowie Abwandlungen möglich sind, ohne dass dadurch der der Erfindung zugrundeliegende Erfindungsgedanke verlassen wird.

### Bezugszeichenliste

- 1: Einhausung
- 2: Ständer oder vertikale Strebe
- 3, 4: Wandelement
- 3.1 - 3.4: Profilabschnitt
- 5, 5a: Leitungsträger
- 6: Basisabschnitt
- 7, 8, 9: Schenkelabschnitt
- 7.1, 8.1, 9.1: freies Ende des Schenkelabschnitts
- 10, 11: Halte- oder Verbindungselement
- 10.1, 11.1: Hakenöffnung
- 10.2, 11.2: freies Hakenende
- 12: plattenförmige Erweiterung
- 13: Rastnase
- 14: Öffnung
- 15, 16, 17, 18: Öffnung
- 19: Verbindungselement
- 19.1: Rastnase
- 20: Vorsprung
- 21: Haltenase oder Verbindungselement
- E1, E2: Ebene

## Patentansprüche

1. Maschine oder Anlage mit einer Leitungsaufnahme zur Aufnahme wenigstens eines Kabels oder einer Leitung, wobei die Leitungsaufnahme aus einer Vielzahl von Leitungsträgern (5, 5a) besteht, die im Verlauf der Leitungsaufnahme voneinander beabstandet und mit wenigstens einem Teilbereich in einer von einem ersten und zweiten Wandabschnitt oder einem ersten und zweiten Profilabschnitt (3.1, 3.2) der Anlage oder Maschine gebildeten Winkelecke angeordnet durch Verrasten an den Wandabschnitten oder Profilabschnitten (3.1, 3.2) gehalten sind, **dadurch gekennzeichnet,**
**dass** die Leitungsträger (5, 5a) als jeweils von einander beabstandete Bügel mit wenigstens einem Basisabschnitt (6) und mit einem vom Basisabschnitt (6) wegstehenden oberen Schenkelabschnitt (7) ausgebildet sind,
**dass** jeder Leitungsträger (5, 5a) mit seinem Basisabschnitt (6) einem ersten Wandabschnitt oder Profilabschnitt (3.2) benachbart angeordnet ist, und
**dass** die Leitungsträger (5, 5a) mit dem oberen Schenkelabschnitt (7) an dem zweiten Wandabschnitt oder Profilabschnitt (3.1) und mit einer Rückseite des Basisabschnittes (6) an dem ersten Wandabschnitt oder Profilabschnitt (3.2) durch Verrasten gehalten sind.

2. Maschine oder Anlage nach Anspruch 1, **dadurch gekennzeichnet, dass** sie eine Packmittelbehandlungsmaschine oder Packmittelbehandlungsanlage ist.

3. Maschine oder Anlage nach Anspruch 1 oder 2, **dadurch gekennzeichnet, dass** jeder Leitungsträger (5, 5a) an dem wenigstens einen, vorzugsweise vertikalen oder im Wesentlichen vertikalen Basisabschnitt (6) zumindest einen von dem Basisabschnitt (6) wegstehenden und eine Auflage für Leitungen bildenden weiteren Schenkelabschnitt (8, 9) aufweist.

4. Maschine oder Anlage nach einem der vorhergehenden Ansprüche, **dadurch gekennzeichnet, dass** die Leitungsträger (5, 5a) als Bügel mit L-Profil oder C-Profil ausgebildet sind.

5. Maschine oder Anlage nach Anspruch 4, **dadurch gekennzeichnet, dass** die Leitungsträger (5, 5a) jeweils C-förmig mit dem Basisabschnitt (6), mit dem oberen Schenkelabschnitt (7) und unten mit dem weiteren, die Auflage für Leitungen bildenden Schenkelabschnitt (8) ausgebildet sind.

6. Maschine oder Anlage nach Anspruch 5, **dadurch gekennzeichnet, dass** die Leitungsträger (5, 5a) mit wenigstens einem zusätzlichen, ebenfalls eine Auflage für Leitungen bildenden Schenkelabschnitt (9) zwischen dem oberen und dem unteren Schenkelabschnitt (7, 8) ausgebildet sind.

7. Maschine oder Anlage nach einem der Ansprüche 3 - 6, **dadurch gekennzeichnet, dass** der die Auflage für Leitungen bildende Schenkelabschnitt (8, 9) an seinem freien Ende mit einem nach oben weisenden Teilabschnitt (8.1, 9.1) ausgebildet ist.

8. Maschine oder Anlage nach einem der vorhergehenden Ansprüche, **dadurch gekennzeichnet, dass** in den Wandabschnitten oder Profilabschnitten (3.1, 3.2) zur Befestigung der Leitungsträger (5, 5a) Ausnehmungen oder Öffnungen (15 - 18) vorgesehen sind, von denen jeweils mehrere, räumlich voneinander beabstandete Öffnungen (15 - 18) eine Öffnungsgruppe zur Befestigung eines Leitungsträgers (5, 5a) bilden, und dass eine Teilmenge der Öffnungen (15 - 18) jeder Öffnungsgruppe in dem zweiten Wandabschnitt oder Profilabschnitt (3.1) und eine Teilmenge der Öffnungen (15 - 18) in dem ersten Wand- oder Profilabschnitt (3.2) vorgesehen ist.

9. Maschine oder Anlage nach einem der vorhergehenden Ansprüche, **dadurch gekennzeichnet, dass** jeder Leitungsträger (5, 5a) an seiner Oberseite, und/oder an der Oberseite seines oberen Schenkelabschnitts (7) mit wenigstens einem hakenartigen und/oder als federnde Rast ausgebildeten Verbindungselement (10, 11, 19) versehen ist, welches den zweiten Wandabschnitt oder den zweiten Profilabschnitt (3.1) im Bereich einer Ausnehmung oder Öffnung (15, 16, 17) übergreift.

10. Maschine oder Anlage nach einem der vorhergehenden Ansprüche, **dadurch gekennzeichnet, dass** die Leitungsträger (5, 5a) an der Rückseite des Basisabschnittes (6) mit wenigstens einem Halteelement versehen sind, welches als Rast (13) oder Haltenase (21) ausgebildet Ist und den ersten Wandabschnitt (3.2) oder den ersten Profilabschnitt (3.2) hintergreift.

11. Maschine oder Anlage nach Anspruch 1, **dadurch gekennzeichnet, dass** der Leitungsträger für eine Befestigung allein durch Verrasten ausgebildet und einstückig als Formteil aus Kunststoff oder einem metallischen Werkstoff hergestellt ist, dass der Leitungsträger als Bügel mit wenigstes einem Basisabschnitt (6), mit einem oberen, vom Basisabschnitt (6) wegstehenden Schenkelabschnitt (7) und mit wenigstens einem weiteren von dem Basisabschnitt (6) wegstehenden und eine Auflage für Leitungen bildenden Schenkelabschnitt (8, 9) ausgebildet ist und an seiner Oberseite oder an der Oberseite des Schenkelabschnitts (7) sowie an der Rückseite des Basisabschnittes (6), mit wenigstens einem hakenartigen und/oder als federnde Rast ausgebildeten Verbindungselement (10, 11, 13, 19) versehen ist.

12. Maschine oder Anlage nach Anspruch 11, **dadurch gekennzeichnet, dass** er mit dem Basisabschnitt (6), mit einem oberen Schenkelabschnitt (7) und einem unteren, die Auflage für Leitungen bildenden Schenkelabschnitt (8) sowie mit wenigstens einem weiteren, ebenfalls eine Auflage für Leitungen bildenden Schenkelabschnitt (9) zwischen dem oberen und den unteren Schenkelabschnitt (7, 8) ausgebildet sind.

13. Maschine oder Anlage nach Anspruch 11 oder 12, **dadurch gekennzeichnet, dass** der wenigstens eine die Auflage für Leitungen bildende Schenkelabschnitt (8, 9) an seinem freien Ende mit einem nach oben weisenden Teilabschnitt (8.1, 9.1) ausgebildet ist.

## Claims

1. Machine or system with a conduit receiving device for receiving at least one cable or conduit, wherein the conduit receiving device is formed by a plurality of conduit carriers (5, 5a) that are spaced apart from one another while the conduit is received and are held, arranged with at least one part region in an angle corner formed by a first and second wall section or first and second profile section (3.1, 3.2) of the system or machine, by latching to the wall sections or profile sections (3.1, 3.2), **characterised in that**
the conduit carriers (5, 5a) are configured in each case as bars, spaced apart from one another, with at least one base section (6) and an upper limb section (7) projecting away from the base section (6),
so that each conduit carrier (5, 5a) is arranged with its base section (6) adjacent to a first wall section or profile section (3.2), and
that the conduit carriers (5, 5a) are held by latching, with the upper limb section (7) at the second wall section or profile section (3.1) and with a rear side of the base section (6) at the first wall section or profile section (3.2).

2. Machine or system according to claim 1, **characterised in that** it is a packing means handling machine or packing means handling system.

3. Machine or system according to claim 1 or 2, **characterised in that** each conduit carrier (5, 5a) comprises, at the at least one preferably vertical or essentially vertical base section (6), at least one further limb section (8, 9) projecting from the base section (6) and forming a support for conduits.

4. Machine or system according to any one of the preceding claims, **characterised in that** the conduit carriers (5, 5a) are configured as bars with L-profile or C-profile.

5. Machine or system according to claim 4, **characterised in that** the conduit carriers (5, 5a) are configured in each case as C-shaped with the base section (6), with the upper limb section (7), and below with the further limb section (8) forming the support for conduits.

6. Machine or system according to claim 5, **characterised in that** the conduit carriers (5, 5a) are configured with at least one additional limb section (9), likewise forming a support for conduits, between the upper and lower limb section (7, 8).

7. Machine or system according to any one of claims 3-6, **characterised in that** the limb section (8, 9), forming the support for conduits, is configured at its free end with a part section (8.1, 9.1) pointing upwards.

8. Machine or system according to any one of the preceding claims, **characterised in that** cut-out apertures or openings (15-18) are provided in the wall sections or profile sections (3.1, 3.2) for securing the conduit carriers (5, 5a), of which in each case a plurality of spatially separated openings (15-18) form an opening group for the securing of a conduit carrier (5, 5a), and that a part quantity of the openings (15-18) of each opening group are provided in the second wall section or profile section (3.1) and a part quantity of the openings (15-18) are provided in the first wall section or profile section (3.2).

9. Machine or system according to any one of the preceding claims, **characterised in that** each conduit carrier (5, 5a) is provided on its upper side, and/or on the upper side of its upper limb section (7), with at least one connecting element (10, 11, 19), in the form of a hook and/or as a spring-loaded latch, which engages over the second wall section or the second profile section (3.1) in the region of a cut-out aperture or opening (15, 16, 17).

10. Machine or system according to any one of the preceding claims, **characterised in that** the conduit carriers (5, 5a) are provided on the rear side of the base section (6) with at least one holding element, which is configured as a latch (13) or holding nose (21), and engages behind the first wall section (3.2) or the first profile section (3.2).

11. Machine or system according to claim 1, **characterised in that** the conduit carrier is configured for securing only by latching, and is produced as one piece as a shaped component made of plastic or a metallic material, that the conduit carrier is configured as a bar, with at least one base section (6), with a limb section (7) projecting from the base section (6), and with at least one further limb section (8, 9) projecting from the base section (6) and forming a support for conduits, and is provided on its upper side, or on the upper side of the limb section (7), as well as on the rear side of the base section (6), with at least one connection element (10, 11, 13, 19) configured as a hook and/or as a spring-loaded latch.

12. Machine or system according to claim 11, **characterised in that** the conduit carrier is configured with a base section (6), with an upper limb section (7), and a lower limb section (8), forming a support for conduits, as well as at least one further limb section (9), likewise forming a support for conduits, between the upper and lower limb sections (7, 8).

13. Machine or system according to claim 11 or 12, **characterised in that** the at least one limb section (8, 9), forming a support for conduits, is configured at its free end with a part section (8.1, 9.1) pointing upwards.

## Revendications

1. Machine ou installation comprenant un logement de ligne servant à loger au moins un câble ou une ligne, sachant que le logement de ligne est constitué d'une pluralité de supports de ligne (5, 5a), qui sont maintenus, selon un espacement les uns des autres le long du logement de ligne et selon un agencement par au moins une zone partielle dans un coin formé par un premier et un deuxième segment de mur ou un premier et deuxième segment de profil (3.1, 3.2) de l'installation ou de la machine, par un encliquetage au niveau des segments de mur ou des segments de profil (3.1, 3.2), **caractérisée en ce**
**que** les supports de ligne (5, 5a) sont réalisés en tant qu'étriers respectivement espacés les uns des autres, pourvus au moins d'un segment de base (6) et d'un segment de branche (7) supérieur dépassant du segment de base (6),
en ce que chaque support de ligne (5, 5a) est disposé de manière adjacente, par son segment de base (6), à un premier segment de mur ou à un premier segment de profil (3.2), et
en ce que les supports de ligne (5, 5a) sont maintenus par encliquetage, par le segment de branche supérieur (7), au niveau du deuxième segment de mur ou du deuxième segment de profil (3.1) et, par une face arrière du segment de base (6), au niveau du premier segment de mur ou du premier segment de profil (3.2).

2. Machine ou installation selon la revendication 1, **caractérisée en ce que** la machine ou l'installation est une machine de traitement d'emballage ou une installation de traitement d'emballage.

3. Machine ou installation selon la revendication 1 ou 2, **caractérisée en ce que** chaque support de ligne (5, 5a) présente, au niveau du segment de base (6) au moins au nombre de un, de préférence vertical ou essentiellement vertical, au moins un autre segment de branche (8, 9) faisant saillie du segment de base (6) et formant un appui pour des lignes.

4. Machine ou installation selon l'une quelconque des revendications précédentes, **caractérisée en ce que** les supports de ligne (5, 5a) sont réalisés en tant qu'étriers présentant un profil en L ou un profil en C.

5. Machine ou installation selon la revendication 4, **caractérisée en ce que** les supports de ligne (5, 5a) sont réalisés respectivement de manière à présenter une forme de C avec le segment de base (6), avec le segment de branche (7) supérieur et, en bas, avec l'autre segment de branche (8) formant l'appui pour des lignes.

6. Machine ou installation selon la revendication 5, **caractérisée en ce que** les supports de ligne (5, 5a) sont réalisés avec au moins un segment de branche (9) supplémentaire formant de la même manière un appui pour des lignes entre le segment de branche supérieur et le segment de branche inférieur (7, 8).

7. Machine ou installation selon l'une quelconque des revendications 3 à 6, **caractérisée en ce que** le segment de branche (8, 9) formant l'appui pour des lignes est réalisé au niveau de son extrémité libre avec un segment partiel (8.1, 9.1) pointant vers le haut.

8. Machine ou installation selon l'une quelconque des revendications précédentes, **caractérisée en ce que** sont prévus, dans les segments de mur ou les segments de profil (3.1, 3.2), aux fins de la fixation des supports de ligne (5, 5a), des évidements ou des orifices (15 - 18), parmi lesquels respectivement plusieurs orifices (15 - 18) espacés spatialement les uns des autres forment un groupe d'orifices servant à fixer un support de ligne (5, 5a), et **en ce qu'**une quantité partielle des orifices (15 - 18) de chaque groupe d'orifices est prévue dans le deuxième segment de mur ou le segment de profil (3.1) et qu'une quantité partielle des orifices (15 - 18) est prévue dans le premier segment de mur ou de profil (3.2).

9. Machine ou installation selon l'une quelconque des revendications précédentes, **caractérisée en ce que** chaque support de ligne (5, 5a) est pourvu, au niveau de sa face supérieure et/ou au niveau de la face supérieure de son segment de branche (7) supérieur, d'au moins un élément de liaison (10, 11, 19) de type crochet et/ou réalisé en tant que moyen d'encliquetage élastique, lequel recouvre le deuxième segment de mur ou le deuxième segment de profil (3.1) dans la zone d'un évidement ou d'un orifice (15, 16, 17).

10. Machine ou installation selon l'une quelconque des revendications précédentes, **caractérisée en ce que** les supports de ligne (5, 5a) sont pourvus au niveau de la face arrière du segment de base (6) d'au moins un élément de maintien, qui est réalisé en tant que moyen d'encliquetage (13) ou ergot de maintien (21) et qui vient en prise par l'arrière avec le premier segment de mur (3.2) ou le premier segment de profil (3.2).

11. Machine ou installation selon la revendication 1, **caractérisée en ce que** le support de ligne est réalisé en vue d'une fixation seulement par encliquetage et est réalisé d'un seul tenant en tant que pièce moulée en matière plastique ou en un matériau métallique, **en ce que** le support de ligne est réalisé en tant qu'étrier pourvu au moins d'un segment de base (6), d'un segment de branche (7) supérieur, faisant saillie du segment de base (6) et d'au moins un autre segment de branche (8, 9) faisant saillie du segment de base (6) et formant un appui pour des lignes et est pourvu, au niveau de sa face supérieure ou au niveau de la face supérieure du segment de branche (7) ainsi qu'au niveau de la face arrière du segment de base (6), d'au moins un élément de liaison (10, 11, 13, 19) de type crochet et/ou réalisé en tant que moyen d'encliquetage élastique.

12. Machine ou installation selon la revendication 11, **caractérisée en ce que** le support de ligne est réalisé avec le segment de base (6), avec un segment de branche supérieur (7) et un segment de branche inférieur (8) formant l'appui pour des lignes ainsi qu'avec au moins un autre segment de branche (9), formant de la même manière un appui pour des lignes, entre le segment de branche supérieur et le segment de branche inférieur (7, 8).

13. Machine ou installation selon la revendication 11 ou 12, **caractérisée en ce que** le au moins un segment de branche (8, 9) formant l'appui pour des lignes est réalisé au niveau de son extrémité libre avec un segment partiel (8.1, 9.1) pointant vers le haut.
